(19) Europäisches Patentamt
European Patent Office
Office européen des brevets

(11) **EP 1 577 683 B1**

(12) **EUROPEAN PATENT SPECIFICATION**

(45) Date of publication and mention of the grant of the patent:
**17.12.2008 Bulletin 2008/51**

(51) Int Cl.:
***G01V 3/26*** (2006.01)

(21) Application number: **04290707.1**

(22) Date of filing: **16.03.2004**

(54) **Characterizing properties of a geological formation by coupled acoustic and electromagnetic measurements**

Charakterisierung der Eigenschaften geologischer Formationen durch kombinierte akustische und elektromagnetische Messungen

Caractérisation des propriétés d'une formation géologique par mesures acoustiques et électromagnétiques couplées

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(43) Date of publication of application:
**21.09.2005 Bulletin 2005/38**

(73) Proprietors:
• **SERVICES PETROLIERS SCHLUMBERGER**
  **75007 Paris (FR)**
  Designated Contracting States:
  **FR**
• **SCHLUMBERGER TECHNOLOGY B.V.**
  **2514 JG Den Haag (NL)**
  Designated Contracting States:
  **AT BE BG CH CY CZ DE DK EE ES FI GR HU IE IT LI LU MC PL PT RO SE SI SK TR**
• **SCHLUMBERGER HOLDINGS LIMITED**
  **Road Town, Tortola (VG)**
  Designated Contracting States:
  **GB NL**

(72) Inventors:
• **Marwan, Charara**
  **75007 Paris (FR)**
• **Ligneul, Patrice**
  **92370 Chaville (FR)**

(74) Representative: **Brykman, Georges et al**
**Osha Liang**
**32 avenue de l'Opéra**
**75002 Paris (FR)**

(56) References cited:
**FR-A- 2 836 557          US-A- 5 841 280**
**US-A1- 2003 038 634**

• ZHENYA ZHU ET AL.: "Experimental studies of electrokinetic conversions in fluid-saturated borehole models" GEOPHYSICS, vol. 64, no. 5, September 1999 (1999-09), pages 1349-1356, XP002288589
• MIKHAILOV O.L. ET AL.: "Using borehole electroseismic measurements to detect and charaterize fractured (permeable) zones" GEOPHYSICS, vol. 65, no. 4, July 2000 (2000-07), pages 1098-1112, XP000970164
• MIKHAILOV, O.L., ET AL.: "Electroseismic investigation of the shallow subsurface: Filedmeasurements and numerical modeling" GEOPHYSICS, vol. 62, no. 1, January 1997 (1997-01), pages 97-105, XP000686604

**Description**

**Background of Invention**

Field of the Invention

The invention relates generally to characterizing properties of a geological formation saturated with a liquid.

Background Art

A logging operation in a borehole consists in physical measurements allowing to determine properties of a formation surrounding the borehole. The measurements allow for example to detect an oil reservoir within the formation.

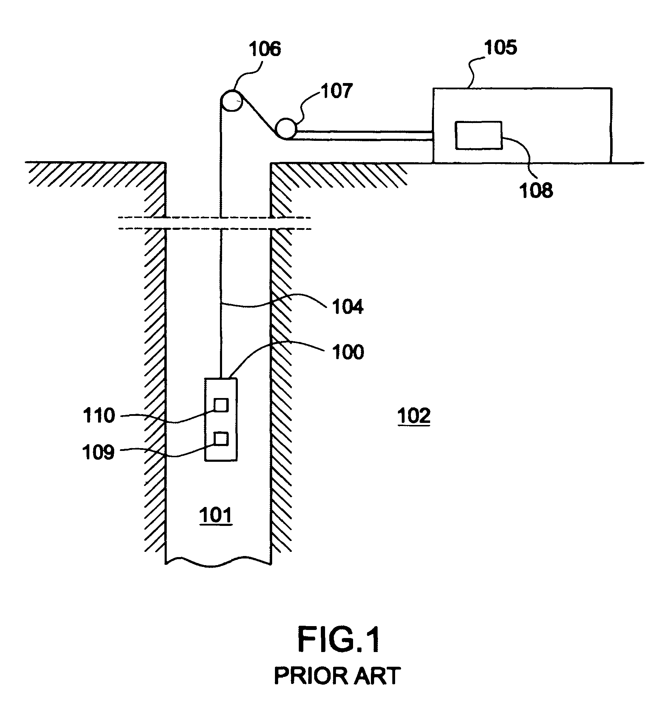

FIG. 1 schematically illustrates an example of a logging operation from prior art. A logging tool 100 is located in a borehole 101 penetrating a formation 102. The logging tool 100 comprises a sensor 109, e.g. an acoustic transducer, an electrode etc. The sensor 109 allows to measure logging data.

The logging tool 100 is lowered in the borehole 101 by a cable 104 and slowly raised by a surface equipment 105 over a sheave wheel 106 while the logging data is recorded. A depth of the logging tool 100 is measured using a depth gauge 107 which measures a cable displacement.

The logging tool may further comprise signal generating means 110, e.g. an acoustic transducer, an electrode, etc. The signal generating means 110 allow to excite the formation 102 with an exciting signal. A response signal generated by the exciting signal, e.g. an echo, or an induced signal, may be measured at the sensor 109.

The logging data acquired may be analysed either in situ near the logging tool 100, or analysed by a data processor 108, or stored, for later analysis.

Typically, the formation 102 may be a porous medium comprising a solid portion and an electrolyte. Electrokinetic phenomena may occur in such a structure.

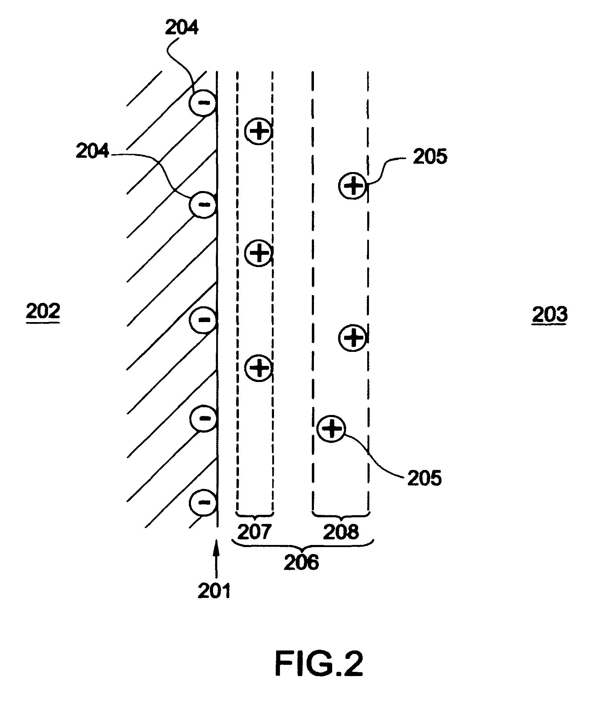

FIG. 2 schematically illustrates an electrochemical solid/electrolyte interface. An electric double layer 206 may be formed at an interface 201 between an electrochemical solid 202 and an electrolyte 203. Charged particles, e.g. anions 204, may be located at a boundary of the electrochemical solid 202. Consequently, oppositely charged particles, e.g. cations 205, may tend to agglutinate close to the boundary of the electrochemical solid 202, thus forming the electric double layer 206. The electric double layer 206 comprise a first layer 207 and a second layer 208. The first layer 207 is composed of adsorbed cations that are attached to the interface 201. The second layer 208 known as diffused layer is composed of free cations.

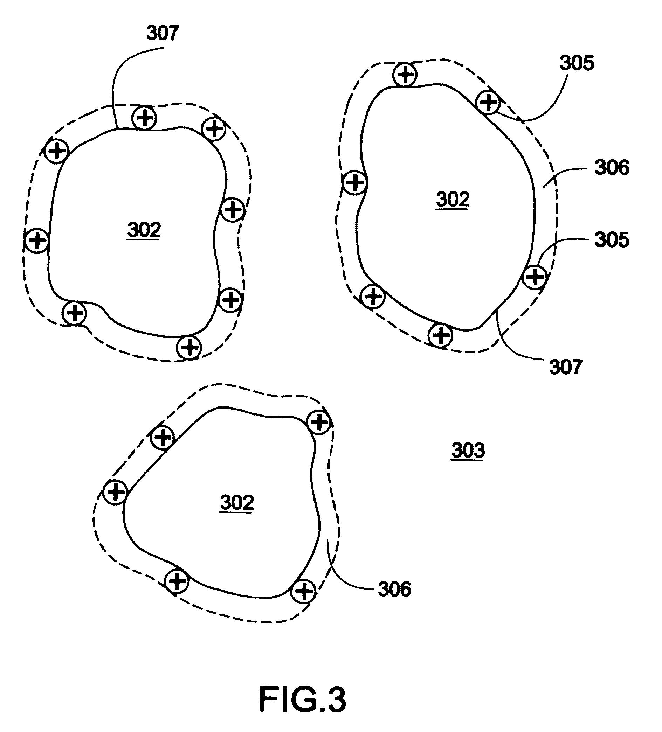

FIG. 3 schematically illustrates an example of a porous medium. The porous medium comprises an electrolyte 303 and a matrix 302, i.e. a solid portion of the porous medium. The matrix is essentially constituted of solid particles 307. Each solid particle 307 is surrounded by an electric double layer 306, due to an agglomerating of charged particles, e.g. cations 305 close to boundaries of the solid particle 307.

A relative motion between the matrix 302 and the electrolyte 303 generates a motion of the free cations 305 of the diffused layer 306. As a consequence, in a case of a moving in a single preferred direction, the free cations 305 are moved following the single preferred direction, thus generating a current.

If an electromagnetic field is applied onto the porous medium, the charged particles of the diffused layers 306 may be moved upon the electromagnetic field. The solid particles 307 are hence also moved.

When provided by an electromagnetic field, the moving of the solid particles 307 is referred to as an electromagneto-seismic effect in the present document.

Similarly, when provided by a seismic displacement, a displacing of the solid particles 307 or a flow of the electrolyte 303 is referred to as an seismo-electromagnetic effect in the present document.

Both phenomena are said to be electrokinetic phenomena.

Various methods of prior art allowing to characterize a formation are based on the electrokinetic phenomenon.

U.S. Pat. 2,814,017 to Schlumberger Well Surveying Corporation, published November 19, 1957, describes a first method for detecting permeable formations among a formation surrounding a borehole. The first method is based on the fact that if periodic pressure oscillations are passed through a permeable formation, a fluid filling interconnected pores of the permeable formation is forced to move in an oscillatory manner. The moving of the fluid is controlled by a viscosity and an inertia of the fluid. An effect of the viscosity on the moving of the fluid is a function of a permeability of the formation. For a plurality of formations of different permeabilities but containing fluids of a same viscosity and inertia, a difference in phase between an electric potential and a pressure hence varies with the permeabilities of the formations.

In one embodiment, periodic pressure oscillations are produced in the formation. Indications are obtained of a phase displacement between the periodic pressure oscillations and any periodically varying electro-filtration potential produced by the periodic pressure oscillation.

In an other embodiment, a periodically varying electric field is established in the formation. Indications are obtained of a phase displacement between the electric field and any periodic pressure oscillation produced by the periodically varying electric field.

In each embodiment, the phase displacement allows to detect the permeable formations and also to provide indications of their comparative permeabilities.

U.S. Pat. 6,225,806 B1 to Court Services Limited, published April 24, 1997, describes a second method for characterizing a formation. A seismic source with two frequencies radiates radially a seismic signal within a borehole. A pair of electrodes above and below the seismic source allows to record a seismo-electric signal. The seismic source is lowered in the borehole and allows to provide a continuous logging of a formation surrounding the borehole. The recorded seismo-electric signal allows to provide a raw evaluating of the permeability of the formation.

US Patent 5,417,104 to Gas Research Institute, published May 23, 1995 describes a third method for determining a permeability of a sample formation.

A pressure is applied to a fluid of the sample formation and an induced voltage signal is measured using a pair of measurement electrodes near the application of said pressure. A differential fluid pressure in the sample formation is also measured between the electrodes.

An electric potential is also applied to the sample formation. An applied voltage signal is measured using a pair of measurement electrodes near the application of the electric potential. An induced differential fluid pressure is measured between the electrodes.

An electrical conductivity of the rock is separately measured.

The permeability is calculated as a simple ratio between applied quantities, i.e. the differential fluid pressure and the applied voltage signal, and induced quantities, i.e. the induced voltage signal and the induced differential fluid pressure.

The third method may fail to provide a reliable measurement of the permeability of a formation surrounding a borehole. Indeed, a mudcake usually covers a wall of the borehole.

US Patent 5,503,001, to Gas Research Institute published April 4, 1996 describes a method allowing to remove effects due to a mudcake when applying the third method within a borehole.

If a pressure is applied onto a wall of the borehole for a short duration, i.e. with an high frequency, a pressure drop occurs only in the mudcake. If a pressure is applied for a longer duration, i.e. with a low frequency, the pressure drop occurs both in the mudcake and in a formation surrounding the borehole. A characteristic frequency $f_s$ marks a maximal change with respect to frequency between the low frequencies and the high frequencies.

The applied pressure diffuses into a fluid of a porous medium according to a diffusion equation. In time t the pressure drop penetrates a distance 1 according to the equation:

$$l^2 = Dt$$

Where D is a diffusion constant, the diffusion constant being characteristic of the porous medium.

The method described above, when performed over a range of frequencies, allows to determine the characteristic frequency $f_s$. As the diffusion constant of the mudcake is known, a thickness $l_{cake}$ of the mudcake may be evaluated.

US Patent 5,841,280, to Western Atlas International, published November 24, 1998, describes a fourth method that allows to estimate a porosity of a formation surrounding a borehole. A transmitter imparts acoustic energy impulses into a liquid filling the wellbore. The acoustic energy impulses reach a wall of the wellbore and propagates in the formation. An acoustic response signal may be detected. An induced electrical voltage, i.e. a seismo-electric signal, is also recorded.

The transmitter may generate various modes of acoustic waves within the formation, e.g. longitudinal waves, shear wave, Stoneley wave.

A Stoneley induced electrical voltage associated with a Stoneley wave has a relatively large amplitude. A seismo-electric Stoneley signal is synthesized from the detected acoustic energy and from an initial value of the porosity. A difference between the synthesized seismo-electric Stoneley signal and the recorded Stoneley induced electrical voltage is calculated. The initial value of the porosity is adjusted according to the difference. The synthesizing of the seismo-electric Stoneley signal, the calculating of the difference and the adjusting of the porosity are repeated until the difference drops below a predetermined threshold, thus allowing to estimate the porosity.

Such an iterative inversion method may be applied to an estimating of a conductivity or a porosity of a fluid of the formation.

The fourth method, unlike the third method, takes into consideration a propagating of a seismic wave in a porous medium of the formation.

A model of electrokinetic phenomena based on both Maxwell's equations relating to electromagnetic phenomena and Biot's equations relating to the propagation of the seismic wave has been described by Steven Pride ("Governing equations for the coupled electromagnetic and acoustic of porous media", Phys. Rev., 1994).

In a case of an acoustic wave having an angular frequency $\omega$, the frequency $\omega/2\pi$ is within a sonic range or within an ultrasonic range. Electromagnetic signals within the sonic range or within the ultrasonic range have relatively large wavelengths, which allows to keep only quasistatic terms in the Maxwell's equations. A coupling between an electric field and a magnetic field may be considered as low and unsteady effects in the Maxwell's equations are neglected.

A resulting Pride's coupling equation may hence be written as:

$$J = \sigma(\omega)E + L(\omega)\left[-\nabla P + \omega^2 \rho_f u_s\right] \qquad \text{(eq. 1)}$$

wherein:

J represents an electric current density;

$\sigma(\omega)$ represents an overall electrical conductivity of the porous medium as a function of the angular frequency $\omega$;

**E** represents the electric field;

$L(\omega)$ represents a frequency dependant electrokinetic coupling coefficient;

P represents a fluid pressure;

$\rho_f$ represents a fluid density; and

**u$_s$** represents a displacement vector of the solid particles.

The fourth method uses the coupling equation (eq. 1) for estimating the conductivity of the fluid of the formation.

The third method fails to take into consideration a possible propagating of a seismic wave in a matrix of the porous medium. The coupling equation between a pressure and an electric field is written in such a streaming model as:

$$J = \sigma(\omega)E - L(\omega)\nabla P$$

Evaluating a permeability of the porous medium is hence performed in the third method by a simple ratio calculation.

Furthermore, a second coupling equation may be written in the streaming model as:

$$-i\omega W = L(\omega)E - \frac{k(\omega)}{\eta}\nabla P$$

wherein W represents a relative fluid-solid motion;

$k(\omega)$ represents a permeability; and

$\eta$ represents a fluid viscosity.

The model described by Steven Pride leads to a Pride's second coupling equation taking into consideration the possible propagating of the seismic wave in the porous medium:

$$-i\omega W = L(\omega)E + \frac{k(\omega)}{\eta}\left[-\nabla P + \omega^2 \rho_f u_s\right] \qquad \text{(eq. 2)}$$

## EP 1 577 683 B1

**Summary of Invention**

In a first aspect, the invention provides a method according to claim 1.

In a first preferred embodiment, the acoustic wave and the electromagnetic exciting field are generated at a logging tool positioned within a borehole surrounded by the formation.

In a second preferred embodiment, an acoustic response signal is measured. The acoustic response signal is produced by the acoustic exciting. Acoustic properties of the formation are estimated from the acoustic response signal. An electromagnetic response signal is measured, the electromagnetic response signal being produced by the electromagnetic exciting. Electromagnetic properties of the formation are estimated from the electromagnetic response signal.

In a third preferred embodiment, the method further comprises selecting initial values of inversion parameters. A synthesis seismo-electromagnetic signal and a synthesis electromagneto-seismic signal are synthesized using the initial values of the inversion parameters. A first difference between the synthesis seismo-electromagnetic signal and the measured seismo-electromagnetic signal is calculated. A second difference between the synthesis electromagneto-seismic signal and the measured electromagneto-seismic signal is calculated. The values of the inversion parameters are adjusted according to the first difference and to the second difference. The method further comprises repeating the synthesizing using the adjusted values of the inversion parameters, the calculating of the first difference, the calculating of the second difference and the adjusting until the first difference and the second difference respectively drop below a first predetermined threshold and a second predetermined threshold.

In a fourth preferred embodiment, the inversion parameters are an electrokinetic coupling coefficient and a mobility. The synthesizing is simplified by synthesizing only a synthesis seismo-electromagnetic slow longitudinal signal and a synthesis electromagneto-seismic slow longitudinal signal from a mobility initial value and from an electrokinetic coupling coefficient initial value.

In a fifth preferred embodiment, the analyzing takes into consideration the propagating of the acoustic wave within the formation.

In a sixth preferred embodiment the seismo-electromagnetic signal is a seismo-electric signal.

In a seventh preferred embodiment, the seismo-electromagnetic signal is a seismo-magnetic signal.

In a eighth preferred embodiment the electromagneto-seismic signal is a magneto-seismic signal.

In a ninth preferred embodiment, the electromagneto-seismic signal is an electro-seismic signal.

In a tenth preferred embodiment, the logging tool is displaced along the borehole so as to provide a continuous characterizing of the formation as a function of depth.

In a second aspect, the invention provides a system according to claim 11.

In an eleventh preferred embodiment, the electromagnetic receiver is an electric receiver allowing to measure a seismo-electric signal produced by the acoustic wave within the formation.

In a twelfth preferred embodiment, the electromagnetic receiver is a magnetic receiver allowing to measure a seismo-magnetic signal produced by the acoustic wave within the formation.

In a thirteenth preferred embodiment, the electromagnetic emitter is an electric emitter allowing excite the formation with an electric exciting field.

In a fourteenth preferred embodiment, the electromagnetic emitter is a magnetic emitter allowing excite the formation with a magnetic exciting field.

In a fifteenth preferred embodiment, the system further comprises at least one additional electromagnetic receiver and at least one additional acoustic receiver.

Other aspects and advantages of the invention will be apparent from the following description and the appended claims.

**Brief Description of Drawings**

FIG. 1 schematically illustrates an example of a logging operation from prior art.

FIG. 2 schematically illustrates an electrochemical solid/electrolyte interface.

FIG. 3 schematically illustrates an example of a porous medium.

FIG. 4 schematically illustrates an example of a system according to the present invention.

FIG. 5 schematically illustrates an example of a system according to a preferred embodiment of the present invention.

FIG. 6 is a flowchart illustrating an example of a method according to an embodiment of the present invention.

FIG. 7 illustrates an example of an algorithm for evaluating characterizing parameters of a formation surrounding a borehole, according to an embodiment of the present invention.

**Detailed Description**

Acoustically exciting a formation generates a seismo-electromagnetic signal that comprises a seismo-electric signal and/or a seismo-magnetic signal. An electric field or a difference of electrical potentials may be measured, thus allowing to measure the seismo-electric signal. Alternatively, a magnetic field is measured, thus allowing to measure the seismo-magnetic signal. Alternatively, both the electric field and the electromagnetic field may be measured.

In the present description, the term "seismo-electromagnetic" may designate a seismo-electric signal produced by an acoustic signal or a seismo-magnetic signal produced by the acoustic signal.

Similarly, it is possible to provide an electrical exciting of the formation : in this latter case, the electromagneto-seismic signal induced within the formation may be designated as "electro-seismic". If the exciting is only magnetic, the electromagneto-seismic signal induced within the formation may be designated as "magneto-seismic".

In the present description, the term "electromagneto-seismic" designates either an electro-seismic signal produced by an electric excitation or a magneto-seismic signal produced by a magnetic excitation.

Characterizing a formation surrounding a borehole, e.g. evaluating a permeability of the formation or a formation factor of the formation, allows to assess a potential moving of a fluid in a porous medium. A quality and a quantity of water or oil reservoirs may subsequently be estimated.

Evaluating the permeability also allows to determine conditions of a further oil production.

The formation parameter allows to evaluate a quantity of oil in the formation.

The third method from prior art involves transient electrokinetic measurements that are rendered difficult by a mudcake of the borehole.

The second method and the fourth method from prior art provide a measurement of a seismo-electric signal produced by a seismic signal. Such a measurement allows to evaluate a porosity of the formation, as performed in the fourth method.

In the second method, the seismic signals are generated at multiple frequencies and amplitudes of the seismo-electric signals produced by the seismic signals are measured at each frequency, which allows to evaluate the permeability of the formation.

There is a need for a method allowing to provide an accurate characterizing of a formation.

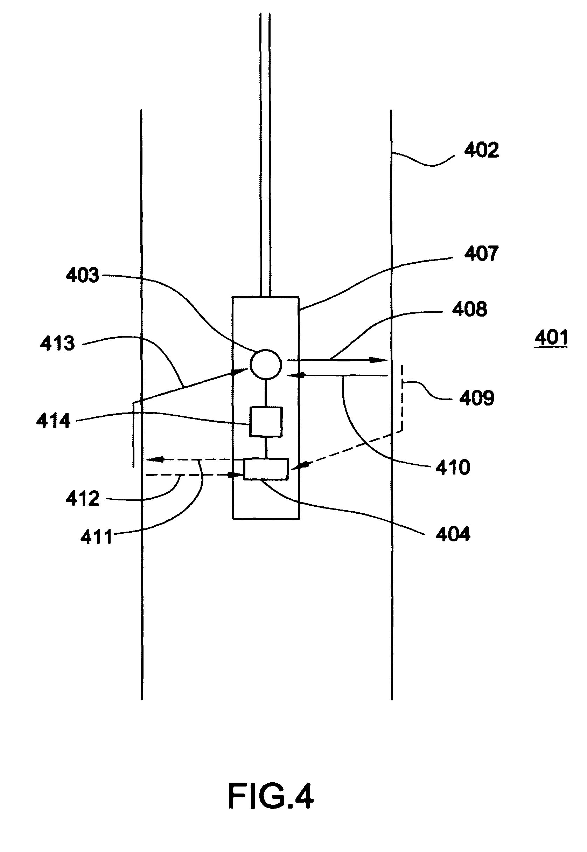

FIG. 4 schematically illustrates an example of a system according to the present invention. Acoustic waves and electromagnetic fields are represented on FIG. 4 by arrows 408, 409, 410, 411, 412 and 413.

The system allows to characterize a formation 401. The formation 401 surrounds a borehole 402. The system may comprise a logging tool 407 to be lowered into the borehole 402. Alternatively, the system may be located at a surface of the formation 401.

An acoustic emitter 403 allows to excite the formation 401 with an acoustic wave 408 propagating within the formation 401. A seismo-electromagnetic signal 409 produced by the acoustic wave 408 within the formation 401 is measured using an electromagnetic receiver 404.

An electromagnetic emitter 404 allows to excite the formation 401 with an electromagnetic exciting field 411. An electromagneto-seismic signal 413 produced by the electromagnetic exciting field 411 within the formation 401 is measured using an acoustic receiver 403.

Processing means 414 allow to analyze the measured seismo-electromagnetic signal 409 and the measured electromagneto-seismic signal 413 so as to evaluate characterizing parameters of the formation 401. The processing means 414 may be part of the logging tool 407 as represented in FIG. 4. Alternatively, the processing means are located at a distinct location, e.g. at surface.

As both the seismo-electromagnetic signal 409 and the electromagneto-seismic signal 413 are measured, a method according to the present invention allows to provide a more accurate evaluating of a permeability of the formation 401 than the second method and the fourth method from prior art.

The seismo-electromagnetic signal 409 is produced by the acoustic wave 408 that propagates within the formation 401. In the third method from prior art, an applied pressure diffuses into a fluid of the formation. The permeability is evaluated by a simple ratio calculation based on a streaming model that fails to take into consideration a propagating of an acoustic wave in a porous medium. The method according to the present invention allows to provide a more accurate evaluating of the permeability of the formation 401.

Furthermore, the method according to the present invention may provide a faster evaluating of the permeability or the other characterizing parameters than the third method from prior art. In particular, the logging tool 407 may preferably be spaced from walls of the borehole 402 and may be easily displaced so as to allow a continuous characterizing of the formation as a function of depth.

Alternatively, the logging tool may contact the walls of the borehole.

In the system of the present invention, the acoustic emitter 403 and the acoustic receiver 403 may be a single device, as represented in FIG. 4. However, the acoustic emitter 403 and the acoustic receiver 403 may also be distinct devices.

One or more additional acoustic receiver(s) (not represented on FIG. 4) may be provided. The acoustic receiver and the additional acoustic receivers may form an array of acoustic receivers.

Similarly, the electromagnetic emitter 404 and the electromagnetic receiver 404 may be a single device, as represented in FIG. 4. However, the electromagnetic emitter 404 and the electromagnetic receiver 404 may be distinct devices.

The system may further comprise one or more additional electromagnetic receiver(s) (not represented on FIG. 4). The electromagnetic receiver and the additional electromagnetic receivers may form an array of acoustic receivers.

Preferably the acoustic emitter 403 and the electromagnetic emitter 404 are located onto the logging tool 407. The acoustic wave 408 and the electromagnetic exciting field 411 are hence generated at the logging tool 407.

The measuring of the seismo-electromagnetic signal may be performed by measuring an electric field only, i.e. the seismo-electromagnetic signal is a seismo-electric signal.

Alternatively, the measuring of the seismo-electromagnetic signal may be performed by measuring a magnetic field only, i.e. the seismo-electromagnetic signal is a seismo-magnetic signal.

Alternatively, both the electric field and the magnetic field are measured.

Similarly, the exciting of the formation with the electromagnetic exciting field is only electric: an electro-seismic signal is subsequently measured.

Alternatively, the exciting of the formation with the electromagnetic exciting field is only magnetic and a magneto-seismic signal is measured.

Alternatively, the formation is excited with both an electric exciting field and a magnetic exciting field, either simultaneously or not. In this latter case, more signals may be measured, thus allowing to insure a reliable evaluating of the characterizing parameters.

Preferably an acoustic response signal 410 is measured after the exciting of the formation 401 with the acoustic wave 408. The acoustic response signal 412 is produced by the acoustic exciting. The acoustic response signal 410 may be measured at the acoustic receiver 403, as represented in FIG. 4, or at any other receiver allowing to measure an acoustic signal.

Similarly, an electromagnetic response signal 412 may be measured after the exciting of the formation with the electromagnetic exciting field 411. The electromagnetic response signal 412 is produced by the electromagnetic exciting. The electromagnetic response signal 412 may be measured at the electromagnetic receiver 404, as represented in FIG. 4, or at any other receiver allowing to measure an electromagnetic signal.

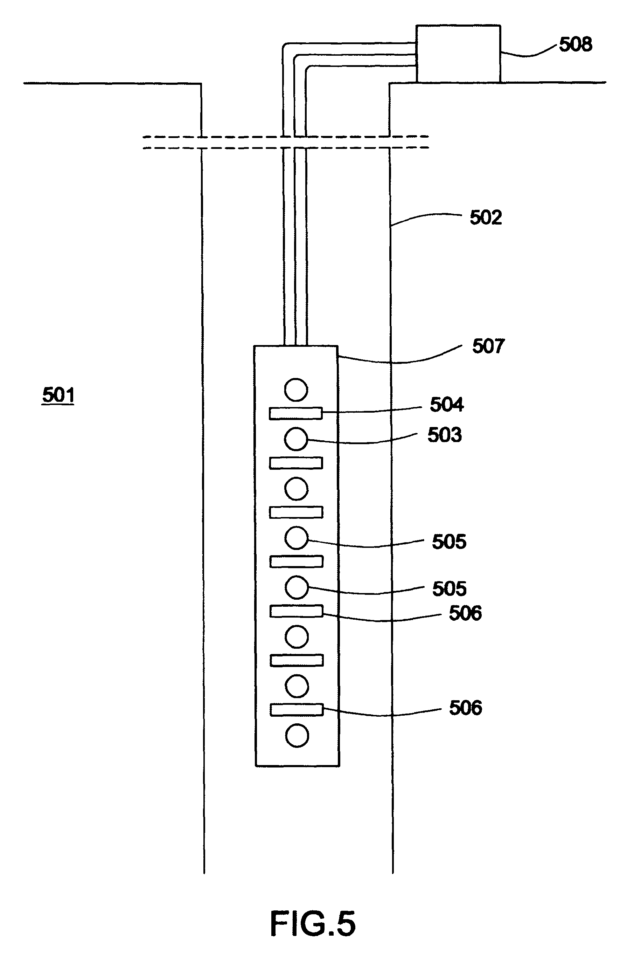

FIG. 5 schematically illustrates an example of a system according to a preferred embodiment of the present invention. The system allows to characterize a formation 501 surrounding a borehole 502. The system comprises a logging tool 507 to be lowered into the borehole 502.

An acoustic emitter 503 and an electromagnetic emitter 504 are located onto the logging tool 507. The acoustic emitter 503 and the electromagnetic emitter 504 respectively allow to excite the formation 501 with an acoustic wave (not represented on FIG. 5) and an electromagnetic exciting field (not represented on FIG. 5).

Preferably the acoustic exciting and the electromagnetic exciting are not performed simultaneously.

The system further comprises an array of acoustic receivers 505 and an array of electromagnetic receivers 506 disposed onto the logging tool 507.

Various modes of the acoustic wave may propagate within the formation, e.g. a fast longitudinal wave or a slow longitudinal wave, a shear wave, a Stoneley wave. The array of acoustic receivers 505 and the array of electromagnetic receivers 506 allow to properly measure signals providing from a desired mode.

Furthermore, as a plurality of acoustic receivers 505 is disposed onto the logging tool 507, acoustic properties of the formation 501 may be easily determined at a further analyzing, e.g. by a simple ratio between a time of detection and a distance between two acoustic receivers 505. Similarly, electromagnetic properties of the formation 501 may be easily determined due to the array of electromagnetic receivers 506.

By "electromagnetic receiver", we designate either an electric receiver or a magnetic receiver. The electric receiver and the magnetic receiver respectively allow to measure a seismo-electric signal and a seismo-magnetic signal produced by the acoustic wave within the formation. The electromagnetic receivers 506 may for example be electrodes, coils, magnetometers etc. depending on which field (electric or magnetic) is to be measured.

Preferably the electromagnetic receivers 506 are relatively close to a wall of the borehole 502 so as to so as to measure signals having a relatively high amplitude. The electromagnetic receivers 506 may also be relatively close to the electromagnetic emitter 504: typically a distance between each electromagnetic receiver 506 and the electromagnetic emitter 504 is relatively small compared to a wavelength of the acoustic wave.

The acoustic receivers 505 may for example be made of a piezoelectric material. However, any other receiver allowing to measure a mechanical signal, e.g. a pressure field or particles velocities, may be used. Preferably the acoustic receivers 505 are relatively close to a wall of the borehole 502 so as to measure signals having a relatively high amplitude.

If a vector quantity, e.g. a magnetic field, is measured, the electromagnetic receivers 506 may either allow measurements relative to a single axis, to two axes or to three axes.

Similarly, if a vector quantity, e.g. a motion of particles, is measured, the acoustic receivers 505 may either allow measurements relative to a single axis, to two axes or to three axes.

By "electromagnetic emitter", we designate either an electric emitter or a magnetic emitter. The electric emitter allows to excite the formation with an electric exciting field and the magnetic emitter allows to excite the formation with a magnetic exciting field. The term "electromagnetic exciting field" hence designate either the electric exciting field, the magnetic exciting field or a combination. Typically, a frequency range of the electromagnetic exciting field is such that a coupling between an electric field and a magnetic field in Maxwell's equations may be neglected: the electromagnetic exciting field is considered to be either the electric exciting field or the magnetic exciting field.

The electromagnetic emitter 504 may for example be an electrode, a coil, or any other device allowing to create an electric field or a magnetic field.

The acoustic emitter 503 may be a transducer, or any device allowing to excite the formation 501 with an acoustic wave. The acoustic emitter 503 may be a monopole, a dipole, or a multipole. The dipole allows for example to excite the formation 501 with a shear acoustic wave.

Preferably the electromagnetic emitter 504 and the acoustic emitter 503 have a same frequency content. The acoustic wave and the electromagnetic exciting field have a same frequency so as to allow a further analysis of measured signals. Preferably the frequency is below a critical frequency of the formation 501. Typically, the frequency is below 5 kHz.

The acoustic exciting and the electromagnetic exciting allow to measure four signals (not represented on FIG. 5) :

- an acoustic response signal, which is produced by the acoustic exciting. The acoustic response signal is measured at the array of acoustic receivers 505.

- a seismo-electromagnetic signal produced by a propagating of the acoustic signal within the formation 501. The seismo-electromagnetic signal is measured at the array of electromagnetic receivers 506.

- an electromagnetic response signal which is produced by the electromagnetic exciting. The electromagnetic response signal is measured at the array of electromagnetic receivers 506.

- an electromagneto-seismic signal produced by the electromagnetic exciting field within the formation 501. The electromagneto-seismic signal is measured at the array of electromagnetic receivers 506.

he measuring of the four signals allows to provide a further analysis. The further analysis allows to evaluate the acoustic properties, the electromagnetic properties and characterizing parameters of the formation 501, using for example processing means 508. The processing means 508 may be a computer located at surface, a processor within the logging tool, or any other device allowing to evaluate the characterizing parameters.

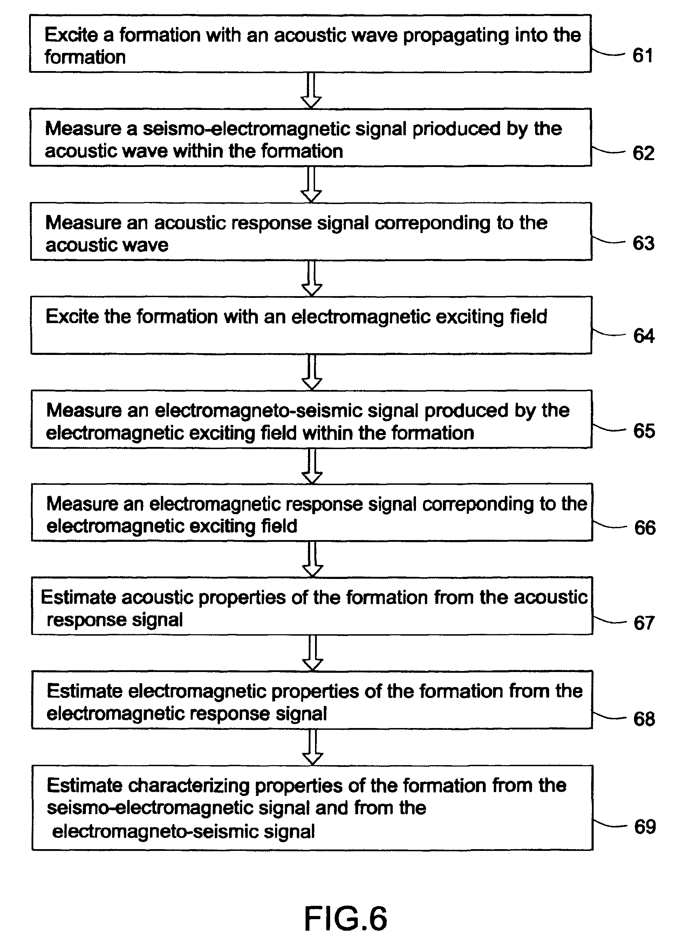

FIG. 6 is a flowchart illustrating an example of a method according to an embodiment of the present invention. The method allows to characterize a formation surrounding a borehole.

The method comprises exciting a formation with an acoustic wave propagating into the formation (box 61). A seismo-electromagnetic signal produced by the acoustic wave within the formation is subsequently measured (box 62). An acoustic response signal corresponding to the acoustic wave is also measured (box 63). The measuring of the acoustic response signal (box 63) may be performed before the measuring of the seismo-electromagnetic signal (box 62), after the measuring of the seismo-electromagnetic signal (box 62), or simultaneously.

The method further comprises exciting a formation with an electromagnetic exciting field (box 64). An electromagneto-seismic signal produced by the electromagnetic exciting field within the formation is subsequently measured (box 65). An electromagnetic response signal corresponding to the electromagnetic exciting field is also measured (box 66). The measuring of the electromagnetic response signal (box 66) may be performed before the measuring of the electromagneto-seismic signal (box 65), after the measuring of the electromagneto-seismic signal (box 62), or simultaneously.

The exciting with the acoustic wave (box 61), the measuring of the seismo-electromagnetic signal (box 62) and the measuring of the electromagnetic response signal (box 63) may be performed after the exciting with the electromagnetic exciting field (box 64) and subsequent measuring steps (boxes 65 and 66). More generally, the exciting steps (boxes 61 and 64) and the measuring steps (boxes 62, 63, 65 and 66) may be performed following any order that allows proper measurements.

Once the seismo-electromagnetic signal, the acoustic response signal, the electromagneto-seismic signal and the electromagnetic response signal are measured, an analysis may be performed so as to evaluate characterizing parameters of the formation.

The acoustic response signal produced by the acoustic exciting (box 61) is an acoustic wave reflected at the formation or having traveled through the formation. Acoustic properties of the formation, e.g. velocities of various modes of acoustic waves, an acoustic impedance may be estimated from the acoustic response signal (box 67).

The estimating of the acoustic properties (box 67) may for example be performed following an iterative inversion method: an initial value of the acoustic properties is selected. A synthesis acoustic response signal is synthesized from the initial value of the acoustic properties. An acoustic difference between the synthesis acoustic response signal and the measured acoustic response signal is calculated. The value of the acoustic properties is adjusted according to the acoustic difference. The synthesizing, the calculating of the acoustic difference and the adjusting may be repeated until the acoustic difference drops below a predetermined acoustic threshold.

Similarly, the electromagnetic response signal produced by the electromagnetic exciting (box 64) is sensitive to electromagnetic properties of the formation. Electromagnetic properties of the formation, e.g. an overall electrical conductivity $\sigma(\omega)$ or dielectric properties, may be estimated from the electromagnetic response signal (box 68).

The estimating of the electromagnetic properties (box 68) may for example be performed following an iterative inversion method: an initial value of the electromagnetic properties is selected. A synthesis electromagnetic response signal is synthesized from the initial value of the electromagnetic properties. An electromagnetic difference between the synthesis electromagnetic response signal and the measured electromagnetic response signal is calculated. The value of the electromagnetic properties is adjusted according to the electromagnetic difference. The synthesizing, the calculating of the electromagnetic difference and the adjusting may be repeated until the electromagnetic difference drops below a predetermined electromagnetic threshold.

Alternatively, the estimating of the acoustic properties (box 67) and the estimating of the electromagnetic properties (box 68) may be performed with a method distinct from the iterative inversion method.

Furthermore, the acoustic properties, e.g. a value of the velocities for longitudinal waves and shear waves, and/or the electromagnetic properties may be estimated from another logging measurement.

The estimating of the acoustic properties (box 67) may also be performed after the estimating of the electromagnetic properties (box 68), or simultaneously.

The estimating of the acoustic properties (box 67) and the estimating of the electromagnetic properties (box 68) allow to evaluate the characterizing parameters (box 69). The characterizing parameters may for example be an electrokinetic coupling coefficient *L,* a formation factor **F** of the formation and a mobility, i.e. a ratio *k*/η of a permeability of the formation over a viscosity of a fluid within the formation.

The permeability *k* may easily be deduced from the ratio *k*η and from the viscosity η.

The electrokinetic coupling coefficient *L* and the permeability *k* generally vary with a frequency of the acoustic wave or of the electromagnetic exciting field.

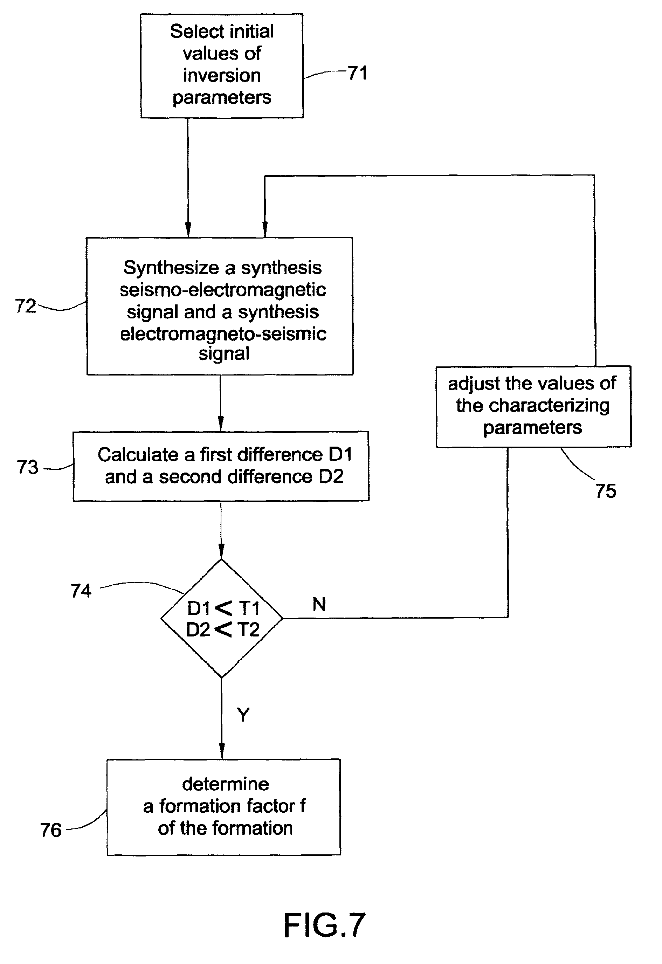

FIG. 7 illustrates an example of an algorithm for evaluating characterizing parameters of a formation surrounding a borehole, according to an embodiment of the present invention. The algorithm of FIG. 7 may be executed by processing means of a system according to the present invention.

Initial values of inversion parameters are selected (box 71). Typically, the inversion parameters are an electrokinetic coupling coefficient *L* and a mobility, i.e. a ratio *k*/η of a permeability of the formation over a viscosity of a fluid within the formation. However, the inversion parameters may be any other parameter involved in equations relating to electrokinetic phenomena.

A synthesis seismo-electromagnetic signal and a synthesis electromagneto-seismic signal are synthesized (box 72) using the initial values of the electrokinetic coupling coefficient *L,* i.e. a coupling initial value, and the initial values of the ratio *k*/η, i.e. a mobility initial value.

A first difference D1 is calculated between the synthesis seismo-electromagnetic signal and a measured seismo-electromagnetic signal and a second difference D2 is calculated between the synthesis electromagneto-seismic signal and a measured electromagneto-seismic signal (box 73). The calculating may for example involve a least squares method.

The first difference D1 is compared to a first predetermined threshold T1 and the second difference D2 is compared to a second predetermined threshold T2 (box 74). If the first difference D1 and the second difference D2 are respectively below the first predetermined threshold T1 and the second predetermined threshold T2, it is considered that the values of the inversion parameters are properly estimated.

If not, the values of the inversion parameters, i.e. the ratio *k*/η of the permeability of the formation over the viscosity and the value of the electrokinetic coupling coefficient *L* are adjusted according to the first difference and to the second difference (box 75).

The synthesizing of the synthesis seismo-electromagnetic signal and of the synthesis electromagneto-seismic signal, the calculating of the first difference and of the second difference, and the adjusting are repeated until the first difference D1 and the second difference D2 drop respectively below the first predetermined threshold T1 and the second predetermined threshold T2.

The synthesizing of the synthesis seismo-electromagnetic signal and of the synthesis electromagneto-seismic signal, the calculating of the first difference and of the second difference, and the adjusting may be performed following any order allowing a proper estimating of the inversion parameters.

When the electrokinetic coupling coefficient *L* and the mobility, i.e. the ratio *k*/η are considered as properly estimated, further characterizing parameters may be estimated. Typically, a value of a formation factor F of the formation may be determined (box 76).

The determining of the formation factor may require to estimate the electrokinetic coupling coefficient **L(ω)** at different angular frequencies. A critical angular frequency $\omega_C$ of the formation may be estimated asymptotically from the following equation, also established by Steven Pride (1994) :

$$L = \frac{\Phi \zeta \varepsilon_f}{\alpha_\infty \eta} \left( 1 - i \frac{\omega}{\omega_c} \right)^{-1/2} \qquad \text{(eq. 3)}$$

wherein :

$\Phi$ represents an interconnected porosity;

$\square$ represents an electrochemical potential;

$\square_\infty$ represents a tortuosity;

$\varepsilon_f$ represents a pore fluid permeability; and wherein :

$$\omega_c = \frac{\Phi \eta}{\alpha_\infty \rho_f k} \qquad \text{(eq. 4)}$$

When the critical angular frequency $\omega_C$ is known, as the ratio **k**/η and the fluid density $\rho_f$ are also estimated, the formation factor F may be determined as :

$$F = \frac{\alpha_\infty}{\Phi} \qquad \text{(eq. 5)}$$

$$\text{i.e. } F = \frac{\eta}{\omega_c \; \rho_f k} \qquad \text{(eq. 6)}$$

The algorithm for evaluating the inversion parameters may be applied to the seismo-electromagnetic signal and to the electromagneto-seismic signal simultaneously, as represented in FIG. 7. The seismo-electromagnetic signal and the electromagneto-seismic signal are inverted simultaneously to evaluate the electrokinetic coupling coefficient **L** and the mobility **k**/η.

Alternatively, one or more steps of the algorithm may be applied to a single signal and be subsequently repeated.

The whole algorithm may even be applied to the electromagneto-seismic signal first, and then to the seismo-electromagnetic signal, or vice-versa, before an additional step in which the electrokinetic coupling coefficient **L** and the mobility **k**/η are estimated from intermediate parameters.

Preferably the synthesizing takes into consideration a propagating of an acoustic wave in the formation. In particular, the propagating of the acoustic wave in a matrix of a porous medium may be considered. The synthesizing is based on Pride's coupling equations (eq. 1 and 2).

Various modes of acoustic waves are generated within the formation, e.g. a fast longitudinal acoustic wave, a slow longitudinal acoustic wave, a shear acoustic wave, a Stoneley acoustic wave. Typically, in a case of an acoustic excitation :

- the fast longitudinal acoustic wave produces a seismo-electric fast longitudinal signal only;

- the slow longitudinal acoustic wave produces a seismo-electric slow longitudinal signal only;

- the shear acoustic wave produces a seismo-magnetic shear signal only;

- the Stoneley acoustic wave produces both a seismo-electric Stoneley signal and a seismo-magnetic Stoneley signal.

The fast longitudinal acoustic wave and the slow longitudinal acoustic wave indeed fail to generate a magnetic field and the shear acoustic wave fails to generate an electric field.

Similarly, in a case of an electric excitation, an electro-seismic fast longitudinal signal, an electro-seismic slow longitudinal signal and an electro-seismic Stoneley signal are produced within the formation.

The synthesizing of a complete synthesis seismo-electromagnetic signal, i.e. a synthesis signal comprising a synthesis seismo-electromagnetic fast longitudinal signal, a synthesis seismo-electromagnetic slow longitudinal signal, a synthesis seismo-electromagnetic shear signal and a synthesis seismo-electromagnetic Stoneley signal, involves relatively complex calculation when based on Pride's coupling equation (eq. 1).

The synthesizing may be simplified by considering only a single mode of acoustic wave, e.g. the slow longitudinal acoustic wave.

Alternatively, a plurality of well-chosen modes of acoustic waves is considered, e.g. the slow longitudinal acoustic wave and the fast longitudinal acoustic wave.

Alternatively, a plurality of modes of acoustic waves may be separately considered, thus involving a plurality of relatively simplified calculations.

Similarly, the synthesizing of a complete synthesis electromagneto-seismic signal involves relatively complex calculation when based on Pride's second coupling equation (eq. 2). The synthesizing may be simplified by considering only a single mode of electromagneto-seismic signal, e.g. the electro-seismic slow longitudinal signal.

Alternatively, a plurality of well-chosen modes of electromagneto-seismic signals is considered, e.g. the electro-seismic slow longitudinal signal and the electro-seismic fast longitudinal signal.

Alternatively a plurality of modes of electromagneto-seismic signals is considered separately, thus involving a plurality of simplified calculations.

The slow longitudinal acoustic wave has a relatively high sensitivity to the mobility. In the case of an acoustic excitation, the slow longitudinal acoustic wave hence is preferably considered. A synthesis seismo-electromagnetic slow longitudinal signal is synthesized from the mobility initial value and from the coupling initial value.

The high sensitivity to the mobility of the slow longitudinal acoustic wave is well known from the art. The method of the present invention considers the seismo-electromagnetic slow longitudinal signal associated to the slow longitudinal acoustic wave to provide information about the mobility. Unlike the slow longitudinal acoustic wave which is relatively difficult to measure directly, the seismo-electromagnetic slow longitudinal signal may be measured relatively easily.

Similarly, a synthesis electromagneto-seismic slow longitudinal signal is synthesized.

The first difference is calculated between the synthesis seismo-electromagnetic slow longitudinal signal and a slow longitudinal portion of the measured seismo-electromagnetic signal.

The second difference is calculated between the synthesis electromagneto-seismic slow longitudinal signal and a slow longitudinal portion of the measured electromagneto-seismic signal.

The first difference and the second difference are subsequently compared to predetermined thresholds, as described in FIG. 7. The values of the inversion parameters, i.e. the permeability of the formation over the viscosity and the value of the electrokinetic coupling coefficient are adjusted according to the first difference and to the second difference. The synthesizing steps, the calculating steps and the adjusting steps may be repeated, thus providing an iterative inversion method for characterizing the formation.

The fast longitudinal wave, the Stoneley wave and the shear wave may also be considered, either alone or in combination with the slow longitudinal wave.

Other simplifications may also be involved in the evaluating of the characterizing parameters.

Alternatively, a distinct method may be used to analyze the seismo-electromagnetic signal and the electromagneto-seismic signal.

The terms "seismic" and "acoustic" may be used indifferently in the present description: both terms relates to a mechanical phenomenon.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention is limited only by the attached claims.

**Claims**

1. A method for characterizing a formation (401; 501) with a logging tool (407; 507) positioned within a borehole (402; 502) surrounded by the formation (401; 501), **characterized in that** the method comprises:

exciting (61) with the logging tool (407; 507) the formation (401; 501)with an acoustic wave propagating into the formation (401; 501);
measuring (62) a seismo-electromagnetic signal produced by the acoustic wave within the formation (401; 501) ;
exciting (64) with the logging tool (407; 507) the formation (401; 501) with an electromagnetic exciting field;
measuring (65) an electromagneto-seismic signal produced by the electromagnetic exciting field within the formation (401; 501);
analyzing (69) the measured seismo-electromagnetic signal and the measured electromagneto-seismic signal to evaluate characterizing parameters of the formation (401:501).

2. The method of claim 1 further comprising:

measuring (63) an acoustic response signal, the acoustic response signal being produced by the acoustic exciting;
estimating (67) acoustic properties of the formation (401; 501) from the acoustic response signal;
measuring (66) an electromagnetic response signal, the electromagnetic response signal being produced by the electromagnetic exciting;
estimating (68) electromagnetic properties of the formation (401; 501) from the electromagnetic response signal.

3. The method of claim 2, further comprising:

selecting (71) initial values of inversion parameters
synthesizing (72) a synthesis seismo-electromagnetic signal and a synthesis electromagneto-seismic signal using the initial values of the inversion parameters;
calculating (73) a first difference between the synthesis seismo-electromagnetic signal and the measured seismo-electromagnetic signal;
calculating (73) a second difference between the synthesis electromagneto-seismic signal and the measured electromagneto-seismic signal;
adjusting (75) the values of the inversion parameters according to the first difference and to the second difference;
repeating the synthesizing using the adjusted values of the inversion parameters, the calculating of the first difference, the calculating of the second difference and the adjusting until the first difference and the second difference respectively drop below a first predetermined threshold and a second predetermined threshold.

4. The method of claim 3, wherein :

the inversion parameters are an electrokinetic coupling coefficient and a mobility;
the synthesizing is simplified by synthesizing only a synthesis seismo-electromagnetic slow longitudinal signal and a synthesis electromagneto-seismic slow longitudinal signal from a mobility initial value and from an electrokinetic coupling coefficient initial value.

5. The method according to any one of claims 1 to 4, wherein

the analyzing takes into consideration the propagating of the acoustic wave (408) within the formation (401, 501).

6. The method according to any one of claims 1 to 5, wherein :

the seismo-electromagnetic signal (409) is a seismo-electric signal.

7. The method according to any one of claims 1 to 5, wherein :

the seismo-electromagnetic (409) signal is a seismo-magnetic signal.

8. The method according to any one of claims 1 to 7, wherein

the electromagneto-seismic signal (413) is a magneto-seismic signal.

9. The method according to any one of claims 1 to 7, wherein

the electromagneto-seismic signal (413) is an electro-seismic signal.

10. The method according to any one of claims 1 to 9, further comprising:

   displacing the logging tool (407; 507) along the borehole (402; 502) so as to provide a continuous characterizing of the formation (401; 501) as a function of depth.

11. A system for characterizing a formation (401) surrounding a borehole (402), **characterized in that** the system comprising:

   a logging tool (407) to be lowered into the borehole;
   an acoustic emitter (403) located onto the logging tool, the acoustic emitter allowing to excite the formation with an acoustic wave (408) propagating within the formation;
   an electromagnetic receiver (404) to measure a seismo-electromagnetic signal (409) produced by the acoustic wave within the formation;
   an electromagnetic emitter (404) located onto the logging tool, the electromagnetic emitter allowing to excite the formation with an electromagnetic exciting field (411);
   an acoustic receiver (403) to measure a electromagneto-seismic signal (413) produced by the electromagnetic exciting field within the formation;
   processing means (414) to analyze the measured seismo-electromagnetic signal and the measured electromagneto-seismic signal so as to evaluate characterizing parameters of the formation.

12. The system of claim 11, wherein :

   the electromagnetic receiver (404) is an electric receiver allowing to measure a seismo-electric signal (409) produced by the acoustic wave (408) within the formation (401).

13. The system of claim 11, wherein :

   the electromagnetic receiver (504) is a magnetic receiver allowing to measure a seismo-magnetic signal produced by the acoustic wave within the formation (501).

14. The system of any one of claims 11 to 13, wherein :

   the electromagnetic emitter (404) is an electric emitter allowing excite the formation (401) with an electric exciting field.

15. The system of any one of claims 11 to 13, wherein :

   the electromagnetic emitter (504) is a magnetic emitter allowing excite the formation (501) with a magnetic exciting field.

16. The system of claim 11, or 12, further comprising:

   At least one additional electromagnetic receiver (506);
   At least one additional acoustic receiver (505).


**Patentansprüche**

1. Verfahren zum Kennzeichnen einer Formation (401; 501) mit einem Protokollierungswerkzeug (407; 507), das in einem von der Formation (401; 501) umgebenen Bohrloch (402; 502) positioniert ist, **dadurch gekennzeichnet, dass** das Verfahren umfasst:

   Erregen (61) der Formation (401; 501) mit einer in die Formation (401; 501) sich ausbreitenden Schallwelle mittels des Protokollierungswerkzeugs (407; 507);
   Messen (62) eines durch die Schallwelle in der Formation (401; 501) erzeugten seismo-elektromagnetischen Signals;
   Erregen (64) der Formation (401; 501) mit einem elektromagnetischen Erregungsfeld mittels des Protokollierungswerkzeugs (407; 507);

Messen (65) eines durch das elektromagnetische Erregungsfeld in der Formation (401; 501) erzeugten elektromagneto-seismischen Signals;

Analysieren (69) des gemessenen seismo-elektromagnetischen Signals und des gemessenen elektromagneto-seismischen Signals, um kennzeichnende Parameter der Formation (401; 501) zu bewerten.

2. Verfahren nach Anspruch 1, das ferner umfasst:

Messen (63) eines akustischen Antwortsignals, wobei das akustische Antwortsignal durch die akustische Erregung erzeugt wird;

Schätzen (67) akustischer Eigenschaften der Formation (401; 501) aus dem akustischen Antwortsignal;

Messen (66) eines elektromagnetischen Antwortsignals, wobei das elektromagnetische Antwortsignal durch die elektromagnetische Erregung erzeugt wird;

Schätzen (68) elektromagnetischer Eigenschaften der Formation (401; 501) aus dem elektromagnetischen Antwortsignal.

3. Verfahren nach Anspruch 2, das ferner umfasst:

Auswählen (71) von Anfangswerten von Inversionsparametern;

Synthetisieren (72) eines seismo-elektromagnetischen Synthesesignals und eines elektromagneto-seismischen Synthesesignals unter Verwendung der Anfangswerte der Inversionsparameter;

Berechnen (73) einer ersten Differenz zwischen dem seismo-elektromagnetischen Synthesesignal und dem gemessenen seismo-elektromagnetischen Signal;

Berechnen (73) einer zweiten Differenz zwischen dem elektromagneto-seismischen Synthesesignal und dem gemessenen elektromagneto-seismischen Signal;

Einstellen (75) der Werte der Inversionsparameter in Übereinstimmung mit der ersten Differenz und der zweiten Differenz;

Wiederholen des Synthetisierens unter Verwendung der eingestellten Werte der Inversionsparameter, des Berechnens der ersten Differenz, des Berechnens der zweiten Differenz und des Einstellens, bis die erste Differenz und die zweite Differenz unter einen ersten vorgegebenen Schwellenwert bzw. einen zweiten vorgegebenen Schwellenwert abfallen.

4. Verfahren nach Anspruch 3, wobei:

die Inversionsparameter ein elektrokinetischer Kopplungskoeffizient und eine Beweglichkeit sind;

das Synthetisieren vereinfacht wird durch Synthetisieren lediglich eines langsamen longitudinalen seismo-elektromagnetischen Synthesesignals und eines langsamen longitudinalen elektromagneto-seismischen Synthesesignals aus einem Anfangswert der Beweglichkeit und aus einem Anfangswert des elektrokinetischen Kopplungskoeffizienten.

5. Verfahren nach einem der Ansprüche 1 bis 4, wobei

das Analysieren die Ausbreitung der Schallwelle (408) in der Formation (401, 501) berücksichtigt.

6. Verfahren nach einem der Ansprüche 1 bis 5, wobei:

das seismo-elektromagnetische Signal (409) ein seismo-elektrisches Signal ist.

7. Verfahren nach einem der Ansprüche 1 bis 5, wobei:

das seismo-elektromagnetische Signal (409) ein seismo-magnetisches Signal ist.

8. Verfahren nach einem der Ansprüche 1 bis 7, wobei:

das elektromagneto-seismische Signal (413) ein magneto-seismisches Signal ist.

9. Verfahren nach einem der Ansprüche 1 bis 7, wobei:

das elektromagneto-seismische Signal (413) ein elektro-seismisches Signal ist.

**10.** Verfahren nach einem der Ansprüche 1 bis 9, das ferner umfasst:

Verlagern des Protokollierungswerkzeugs (407; 507) längs des Bohrlochs (402; 502), um so eine kontinuierliche Kennzeichnung der Formation (401; 501) als Funktion der Tiefe zu schaffen.

**11.** System zum Kennzeichnen einer Formation (401), die ein Bohrloch (402) umgibt, **dadurch gekennzeichnet, dass** das System umfasst:

ein Protokollierungswerkzeug (407), das in das Bohrloch abzusenken ist;
einen akustischen Sender (403), der sich an dem Protokollierungswerkzeug befindet, wobei der akustische Sender ermöglicht, die Formation mit einer in der Formation sich ausbreitenden Schallwelle (408) zu erregen;
einen elektromagnetischen Empfänger (404), um ein seismo-elektromagnetisches Signal (409), das durch die Schallwelle in der Formation erzeugt wird, zu messen;
einen elektromagnetischen Sender (404), der sich an dem Protokollierungswerkzeug befindet, wobei der elektromagnetische Sender ermöglicht, die Formation mit einem elektromagnetischen Erregungsfeld (411) zu erregen;
einen akustischen Empfänger (403), um ein elektromagneto-seismisches Signal (413), das durch das elektromagnetische Erregungsfeld in der Formation erzeugt wird, zu messen;
Verarbeitungsmittel (414), um das gemessene seismo-elektromagnetische Signal und das gemessene elektromagneto-seismische Signal zu analysieren, um so kennzeichnende Parameter der Formation zu bewerten.

**12.** System nach Anspruch 11, wobei:

der elektromagnetische Empfänger (404) ein elektrischer Empfänger ist, der ermöglicht, ein seismo-elektrisches Signal (409), das durch die Schallwelle (408) in der Formation (401) erzeugt wird, zu messen.

**13.** System nach Anspruch 11, wobei:

der elektromagnetische Empfänger (504) ein magnetischer Empfänger ist, der ermöglicht, ein seismo-magnetisches Signal, das durch die Schallwelle in der Formation (501) erzeugt wird, zu messen.

**14.** System nach einem der Ansprüche 11 bis 13, wobei:

der elektromagnetische Sender (404) ein elektrischer Sender ist, der ermöglicht, die Formation (401) mit einem elektrischen Erregungsfeld zu erregen.

**15.** System nach einem der Ansprüche 11 bis 13, wobei:

der elektromagnetische Sender (504) ein magnetischer Sender ist, der ermöglicht, die Formation (501) mit einem magnetischen Erregungsfeld zu erregen.

**16.** System nach Anspruch 11 oder 12, das ferner umfasst:

wenigstens einen zusätzlichen elektromagnetischen Empfänger (506); und
wenigstens einen zusätzlichen akustischen Empfänger (505).

**Revendications**

**1.** Procédé de caractérisation d'une formation (401 ; 501) avec un outil de diagraphie (407 ; 507) positionné à l'intérieur d'un trou de sonde (402 ; 502) entouré par la formation (401 ; 501), **caractérisé en ce que** le procédé comprend :

l'excitation (61) avec l'outil de diagraphie (407 ; 507) de la formation (401 ; 501) avec une onde acoustique se propageant dans la formation (401 ; 501) ;
la mesure (62) d'un signal sismo-électromagnétique produit par l'onde acoustique à l'intérieur de la formation (401 ; 501) ;
l'excitation (64) avec l'outil de diagraphie (407 ; 507) de la formation (401 ; 501) avec un champ électromagnétique d'excitation ;

la mesure (65) d'un signal électromagnéto-sismique produit par le champ électromagnétique d'excitation à l'intérieur de la formation (401 ; 501) ;
l'analyse (69) du signal sismo-électromagnétique mesuré et du signal électromagnéto-sismique mesuré pour évaluer des paramètres de caractérisation de la formation (401 ; 501).

2. Procédé selon la revendication 1, comprenant en outré :

la mesure (63) d'un signal de réponse acoustique, le signal de réponse acoustique étant produit par l'excitation acoustique ;
l'estimation (67) de propriétés acoustiques de la formation (401 ; 501) à partir du signal de réponse acoustique ;
la mesure (66) d'un signal de réponse électromagnétique, le signal de réponse électromagnétique étant produit par l'excitation électromagnétique ;
l'estimation (68) de propriétés électromagnétiques de la formation (401 ; 501) à partir du signal de réponse électromagnétique.

3. Procédé selon la revendication 2, comprenant en outré :

la sélection (71) de valeurs initiales de paramètres d'inversion
la synthèse (72) d'un signal sismo-électromagnétique de synthèse et d'un signal électromagnéto-sismique de synthèse au moyen des valeurs initiales des paramètres d'inversion ;
le calcul (73) d'une première différence entre le signal sismo-électromagnétique de synthèse et le signal sismo-électromagnétique mesuré ;
le calcul (73) d'une seconde différence entre le signal électromagnéto-sismique de synthèse et le signal électromagnéto-sismique mesuré ;
l'ajustement (75) des valeurs des paramètres d'inversion selon la première différence et la seconde différence ;
la répétition de la synthèse au moyen des valeurs ajustées des paramètres d'inversion, le calcul de la première différence, le calcul de la seconde différence et l'ajustement jusqu'à ce que la première différence et la seconde différence chutent respectivement en dessous d'un premier seuil prédéterminé et d'un second seuil prédéterminé.

4. Procédé selon la revendication 3, dans lequel :

les paramètres d'inversion sont un coefficient de couplage électrocinétique et une mobilité ;
la synthèse est simplifiée en synthétisant seulement un signal sismo-électromagnétique longitudinal lent de synthèse et un signal électromagnéto-sismique longitudinal lent de synthèse à partir d'une valeur initiale de mobilité et à partir d'une valeur initiale de coefficient de couplage électrocinétique.

5. Procédé selon l'une quelconque des revendications 1 à 4, dans lequel

l'analyse prend en compte la propagation de l'onde acoustique (408) à l'intérieur de la formation (401, 501).

6. Procédé selon l'une quelconque des revendications 1 à 5, dans lequel :

le signal sismo-électromagnétique (409) est un signal sismo-électrique.

7. Procédé selon l'une quelconque des revendications 1 à 5, dans lequel :

le signal sismo-électromagnétique (409) est un signal sismo-magnétique.

8. Procédé selon l'une quelconque des revendications 1 à 7, dans lequel

le signal électromagnéto-sismique (413) est un signal magnéto-sismique.

9. Procédé selon l'une quelconque des revendications 1 à 7, dans lequel

le signal électromagnéto-sismique (413) est un signal électro-sismique.

10. Procédé selon l'une quelconque des revendications 1 à 9, comprenant en outré :

le déplacement de l'outil de diagraphie (407 ; 507) le long du trou de sonde (402 ; 502) afin de fournir une caractérisation continue de la formation (401 ; 501) en fonction de la profondeur.

11. Système de caractérisation d'une formation (401) entourant un trou de sonde (402), **caractérisé en ce que** le système comprend :

un outil de diagraphie (407) à descendre dans le trou de sonde ;
un émetteur acoustique (403) situé sur l'outil de diagraphie, l'émetteur acoustique permettant l'excitation de la formation avec une onde acoustique (408) se propageant à l'intérieur de la formation ;
un récepteur électromagnétique (404) pour mesurer un signal sismo-électromagnétique (409) produit par l'onde acoustique à l'intérieur de la formation ;
un émetteur électromagnétique (404) situé sur l'outil de diagraphie, l'émetteur électromagnétique permettant l'excitation de la formation avec un champ électromagnétique d'excitation (411) ;
un récepteur acoustique (403) pour mesurer un signal électromagnéto-sismique (413) produit par le champ électromagnétique d'excitation à l'intérieur de la formation ;
des moyens de traitement (414) pour analyser le signal sismo-électromagnétique mesuré et le signal électromagnéto-sismique mesuré afin d'évaluer des paramètres de caractérisation de la formation.

12. Système selon la revendication 11, dans lequel :

le récepteur électromagnétique (404) est un récepteur électrique permettant la mesure d'un signal sismo-électrique (409) produit par l'onde acoustique (408) à l'intérieur de la formation (401).

13. Système selon la revendication 11, dans lequel :

le récepteur électromagnétique (504) est un récepteur magnétique permettant la mesure d'un signal sismo-électrique produit par l'onde acoustique à l'intérieur de la formation (501).

14. Système selon l'une quelconque des revendications 11 à 13, dans lequel :

l'émetteur électromagnétique (404) est un émetteur électrique permettant l'excitation de la formation (401) avec un champ électrique d'excitation.

15. Système selon l'une quelconque des revendications 11 à 13, dans lequel :

l'émetteur électromagnétique (504) est un émetteur magnétique permettant l'excitation de la formation (501) avec un champ magnétique d'excitation.

16. Système selon la revendication 11 ou 12, comprenant en outré :

au moins un récepteur électromagnétique (506) supplémentaire ;
au moins un récepteur acoustique (505) supplémentaire.

# FIG.1
## PRIOR ART

**FIG.2**

# FIG.3

FIG.4

**FIG.5**

Excite a formation with an acoustic wave propagating into the formation — 61

Measure a seismo-electromagnetic signal prioduced by the acoustic wave within the formation — 62

Measure an acoustic response signal correponding to the acoustic wave — 63

Excite the formation with an electromagnetic exciting field — 64

Measure an electromagneto-seismic signal produced by the electromagnetic exciting field within the formation — 65

Measure an electromagnetic response signal correponding to the electromagnetic exciting field — 66

Estimate acoustic properties of the formation from the acoustic response signal — 67

Estimate electromagnetic properties of the formation from the electromagnetic response signal — 68

Estimate characterizing properties of the formation from the seismo-electromagnetic signal and from the electromagneto-seismic signal — 69

FIG.6

Select initial
values of
inversion
parameters — 71

72 — Synthesize a synthesis
seismo-electromagnetic
signal and a synthesis
electromagneto-seismic
signal

adjust the values of
the characterizing
parameters

75

73 — Calculate a first difference D1
and a second difference D2

74 — D1 < T1
D2 < T2    N

Y

determine
a formation factor f
of the formation

76

FIG.7

**EP 1 577 683 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2814017 A
- US 6225806 B1
- US 5417104 A
- US 5503001 A
- US 5841280 A